Europäisches Patentamt

European Patent Office

Office européen des brevets

(11) Publication number : **0 452 039 B1**

# EUROPEAN PATENT SPECIFICATION

(45) Date of publication of patent specification :
**21.12.94 Bulletin 94/51**

(51) Int. Cl.⁵ : **G11B 5/718,** G11B 5/704,
G11B 5/706

(21) Application number : **91302973.2**

(22) Date of filing : **04.04.91**

(54) **Magnetic recording medium.**

(30) Priority : **05.04.90 JP 90806/90**

(43) Date of publication of application :
**16.10.91 Bulletin 91/42**

(45) Publication of the grant of the patent :
**21.12.94 Bulletin 94/51**

(84) Designated Contracting States :
**DE FR GB**

(56) References cited :
EP-A- 0 283 852
EP-A- 0 308 979
**IEEE TRANSCATIONS ON MAGNETICS, vol.
MAG-20, no. 1, January 1984, pages 108-110,
IEEE, New York, US; P. BUTTAFAVA et al.:
"Effects of thickness andmagnetic properties
of double layer media on perpendicular recor-
dingcharacteristics"**

(56) References cited :
**IEEE TRANSACTIONS ON MAGNETICS, vol.
MAG-20, no. 1, January 1984, pages 99-
101,IEEE, New York, US; K. OUCHI et al.:
"Performances of double layer medium inper-
pendicular recording"**

(73) Proprietor : **MATSUSHITA ELECTRIC
INDUSTRIAL CO., LTD.
1006, Kadoma
Kadoma-shi, Osaka-fu 571 (JP)**

(72) Inventor : **Aoki, Nobuyuki
46-ban, 3-107, Yamadaike,
Higashimachi
Hirakata-shi, Osaka-fu 573-01 (JP)**
Inventor : **Mukae, Hideaki
70-6, Ikejiri
Sanda-shi, Hyogo-ken 669-13 (JP)**

(74) Representative : **Crawford, Andrew Birkby et al
A.A. THORNTON & CO.
Northumberland House
303-306 High Holborn
London WC1V 7LE (GB)**

## Description

The present invention relates to a magnetic recording medium for use with e.g. video equipment for high-density recording of video signals and particularly, a magnetic thin film recording medium capable of long-time recording and more particularly, a magnetic recording medium having a nonmagnetic substrate coated at one side with a magnetic layer and at the other or reverse side with a backcoating layer.

Magnetic recording mediums, particularly in a tape form, have been required to be reduced in thickness for contributing to recording of short-wave signals and recording of a large quantity of information data to meet the demand for high-density recording of mass data in digital form. It is, however, known that the thinner the thickness of a magnetic recording tape becomes, the more the running stability and operational durability are declined. In addition, performance of the electric-to-magnetic conversion will with no doubt be affected. Those drawbacks result from sharp declination in the physical strength of a tape which has been reduced to an extreme in the thickness.

Some possible reasons why the running stability, operational durability, and electric-to-magnetic conversion of a tape are affected by the declination in the tape rigidity will now be described with respect to a video tape. A video tape is designed to travel along and at angles to various tape guide posts in a video tape recorder (VTR). Some of the tape guide posts are arranged to restrict an upper position and a lower position of the tape to allow the running tape to pass in position. If the running tape tends to deflect from its path during passing a positioning guide post, a controlling force is involved which derives from the rigidity of the tape (which acts as a counter strength to an external stress exerted for distorting the tape). The tape rigidity can also act to control the contact stability (associated with a spacing between the tape surface and a magnetic head and also, its contacting consistency) between the magnetic head and the running tape which remains tensioned constantly during movement. Accordingly, when the rigidity of the tape is declined by thinning the tape, creasing or crimping error will appear at the edge of the running tape. Simultaneously, a playback output associated with the quality of electric-to-magnetic conversion will be attenuated and also, increase in variation.

For offsetting the declination in the rigidity of a video tape (which has a reduced thickness of e.g. 12 $\mu$m in VHS format and 10 $\mu$m in 8-mm video format), various attempts have been proposed to improved the rigidity of each of the nonmagnetic substrate, the magnetic layer and the backcoating layer. It is known that a polyester material, e.g. polyethylene terephthalate (referred to as PET hereinafter) or polyethylene naphthalate (referred to as PEN hereinafter), which forms the nonmagnetic substrate, is replaced by a high-rigidity, high thermal resistance material such as aromatic polyamide or aromatic polyimide for increasing the rigidity (for example, as disclosed in Japanese Patent Laid-open Publication 49-3121 (1974) or 1-43364 (1989)). Such materials are high in the rigidity but costly as compared with known PET or PEN and also, exhibit a lower adhesivity to both the magnetic and backcoating layers and a higher moisture absorption.

Also, it has been proposed to form a high rigidity metal thin film between the magnetic layer and the non-magnetic substrate for improvement of the tape rigidity (for example, as depicted in Japanese Patent Laid-open Publication 60-205821 (1985) or 63-143433 (1988)). In this technique, the adhesivity of the metal thin film to the magnetic layer or backcoating layer remains low and a difference in rigidity between the layers will be increased, resulting in fracture or breakage of the tape.

The rigidity of the magnetic layer and the backcoating layer is enhanced by increasing the amount of a filler such as magnetic powder in the magnetic layer, providing an additional filler for reinforcement, or elevating the shifting point to glass of a resin binder for bonding the layers (for example, as described in Japanese Patent Laid-open Publications 63-29334 (1988), 2-26285 (1990), and 61-278020 (1986). However, increasing the amount of a magnetic powder filler in the magnetic layer will lower the operational durability of the tape, and providing an additional filler will cause a difficulty in the dispersion and arrangement of filler substances and, if worse, result in deterioration in the smoothness of the tape surface. Also, with the use of a bonding resin binder having a higher softening point, the rigidity of the coating layers remains below an appreciable level. As the resin binder becomes harder when solidified, the surface of the coating layers will scarcely be improved in smoothness. It will then be difficult to improve the dispersion, response action, and durability of a filler in the coating layer at the same time.

Two articles in the Jan. 1984 issue of IEEE Transactions on Magnetics, Vol. MAG-20, No. 1 mention use of double layer media in perpendicular recording. "Performances of Double Layer Medium in Perpendicular Recording" by Ouchi et al (pages 99-101) discusses the recording/reproduction performance obtained when using a recording medium including a recording layer (Co-Cr) with perpendicular anistropy and a soft magnetic back layer. "Effects of Thickness and Magnetic Properties of Double Layer Media on Perpendicular Recording Characteristics" by Buttafava et al (pages 108 to 110) also discusses the recording/reproduction qualities of a three layer recording medium including a magnetic recording layer (Co-Cr) and a soft magnetic back layer (NiFe) deposited on a PET substrate.

Heretofore, the running stability and operational durability of a magnetic recording medium could hardly be enhanced without deteriorating the quality of electric-to-magnetic conversion while the magnetic recording medium is enhanced in surface smoothness and reduced in thickness for implementation of high-density, mass-data magnetic recording.

It is an object of the present invention to provide a magnetic recording medium which, when smoothed at surface and reduced in the thickness for the purpose of high density recording and mass data storage, can remain intact or be increased in rigidity without affecting its playback characteristics, thus preventing physical injury and ensuring stability in output.

After intensive study on solving the aforementioned problems, it was found that a magnetic recording medium is increased in the rigidity without affecting its playback characteristics by arranging a coating of plate-like hexagonal ferrite magnetic powder material on one side of the nonmagnetic substrate, opposite to the side where a magnetic recording layer is provided. Accordingly, a magnetic recording medium of the present invention comprises

a nonmagnetic substrate;

a magnetic recording layer arranged on one surface of the substrate; and

a backcoating layer arranged on the other surface of the substrate,

characterized in that said backcoating layer comprises a lower layer formed on the substrate and a non-magnetic backcoating layer formed on said lower layer, said lower layer comprising a plate-like hexagonal ferrite magnetic powder material and said non-magnetic backcoating layer having thickness ranging from 0.3 to 1.0 µm.

More specifically, a magnetic recording medium of the present invention is arranged in which a backcoating layer contains a plate-like hexagonal ferrite magnetic powder material so that the rigidity thereof can be increased without deteriorating the quality of electric-to-magnetic conversion. The improvement resides in the properties of the plate-like hexagonal ferrite magnetic powder material provided in the form of a lower backcoating layer. In more detail, the plate-like hexagonal ferrite magnetic powder material is arranged isotropic, in which plate-like particles are aligned in the same direction so that anisotropy for the rigidity is eliminated in relation to the running direction, whereby the rigidity of the recording medium will be higher than that of the nonmagnetic substrate. Also, the plate-like hexagonal ferrite magnetic powder material is ferromagnetic powder which allows the backcoating layer to be simultaneously formed in multi-layer arrangement and in which the particle alignment in a given direction can easily be executed by means of magnetic field orientation. As the result, the rigidity of the recording medium will be increased and made isotropic in relation to the running direction. Furthermore, the magnetic recording medium according to the present invention in which while the rigidity is increased, both the running stability and operational durability remain intact with no deterioration in the quality of electric-to-magnetic conversion will be fabricated at low cost.

Fig.1 is a cross sectional view of a video tape associated with Example 1, showing an embodiment of the present invention; and

Fig.2 is a cross sectional view of a conventional video tape associated with Comparative Example 1.

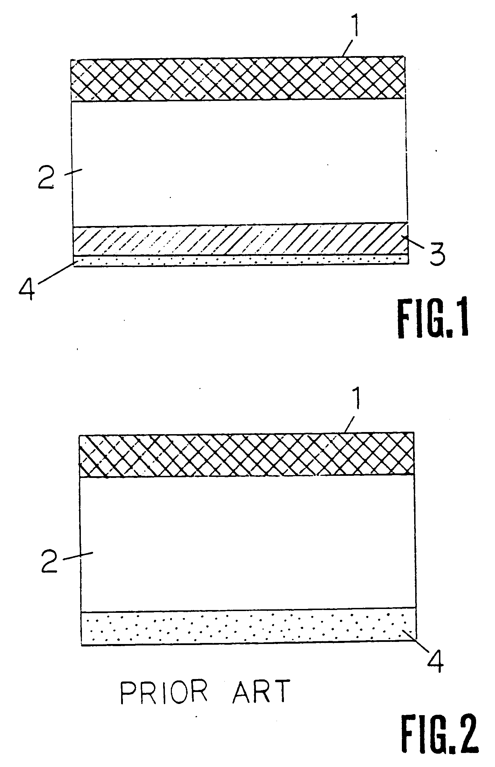

A preferred embodiment of the present invention will be described referring to the drawings. Fig.1 is a cross sectional view of a magnetic recording tape of the preferred embodiment which consists mainly of a magnetic recording layer 1, a nonmagnetic substrate 2, a first backcoating layer 3 of plate-like hexagonal ferrite magnetic powder material, and a second backcoating layer 4 of nonmagnetic material. The magnetic recording tape of the present invention incorporates two backcoating layers, in which the lower backcoating layer 3 comprises a plate-like hexagonal ferrite magnetic powder material, so that the rigidity thereof can be increased and an anisotropic phenomenon in the rigidity relative to the running direction can be eliminated.

In particular, the plate-like hexagonal ferrite magnetic powder material of the backcoating layer 3 needs to have a higher aspect ratio (diameter-to-thickness ratio) and to extend at a high density throughout the layer. The rigidity of a magnetic recording medium can thus be enhanced without affecting the electric-to-magnetic conversion by means of the plate-like hexagonal ferrite magnetic powder material of the lower backcoating layer 3 of the two backcoating layers. Hence, the magnetic recording medium will have improved running stability and operational durability without deteriorating its property for electric-to-magnetic conversion.

The plate-like hexagonal ferrite magnetic powder material according to the present invention is preferably, but not limited to, a ferromagnetic material incorporating a plate-like form of hexagonal shape. Although it is preferred that the aspect ratio (particle diameter-to-thickness ratio) in magnetic powder particles of the hexagonal ferrite magnetic powder material is higher, the magnetic particles may not be limited to such a high ratio but may be aligned in one direction by means of magnetic field orientation. More particularly, the magnetic powder particles in the lower backcoating layer 3 of the two backcoating layers provided for enhancement in the rigidity are preferably aligned by means of the magnetic field orientation so that the easy magnetization axis is in a constant direction. Also, the hexagonal ferrite magnetic powder material may be aligned with the plate surface of each particle in perpendicular to the running direction of the medium and more preferably, in parallel to the same.

The nonmagnetic backcoating layer 4 arranged on the hexagonal ferrite magnetic powder backcoating layer 3 has a thickness ranging from 0.3 to 1.0 $\mu$m preferably. If the thickness is less than 0.3 $\mu$m, uniform formation of a thin film of the backcoating layer 4 will extremely be difficult and also, the hexagonal ferrite magnetic powder material in the backcoating layer 3 may affect on the magnetic recording layer 1 due to magnetic transition. If the thickness is more than 1.0 $\mu$m, the overall thickness of the magnetic recording medium will be increased thus diminishing the capability of mass data storage.

The magnetic recording layer 1 in the magnetic recording medium of the present invention may be formed of a coating type or a metal thin film type, but not limited to such types. The magnetic material of the magnetic recording layer 1 may be selected from $\gamma$-$Fe_2O_3$, $Fe_2O_3$ containing Co, $Fe_3O_4$ containing Co, $CrO_2$, an oxide magnetic powder such as barium ferrite, Fe, Fe-Ni, non-oxide magnetic metal such as Fe-Co, or a magnetic alloy.

The nonmagnetic backcoating layer 4 of the magnetic recording medium is formed by coating the opposite side of the nonmagnetic substrate 2 to a side where the magnetic recording layer 1 extends with a backcoating material, e.g. a mixture of nonmagnetic powder, binder, dispersant, lubricant, and solvent, which is prepared in a known manner, simultaneously with a hexagonal ferrous magnetic powder material for the first backcoating layer 3. After being dried out, the nonmagnetic backcoating layer 4 may be smoothed on top and heat treated if necessary.

In fabrication of a thin film type magnetic recording tape according to the present invention, the magnetic recording layer 1 and the two backcoating layers 3 and 4 are all bonded to the substrate 2 by a bonding resin which may be a mixture of isocyanate compound and thermoplastic resin, e.g. polyvinyl chloride resin, polyurethane resin, or polyester resin, or a combination of ultraviolet or electron curing resins which have unsaturated double bonding constructions.

The nonmagnetic powder material of the nonmagnetic backcoating layer 4 is preferably carbon black, zinc oxide, calcium carbonate, magnesium sulfate, or their mixture whichever can provide improvement in the running stability, electric conductivity, and shading effect. Also, an additive of aluminum oxide, chromium oxide (IV), or titanium oxide may be added to the nonmagnetic powder material if desired.

The nonmagnetic substrate 2 is preferably selected from and not limited to polyester such as PET or PEN, polyolefin such as polyethylene or polypropylene, polyimide, or aromatic polyamide in which a polyester material may be most preferred in view of operational durability, rigidity, and production cost.

In general, the magnetic recording layer and the two backcoating layers of the magnetic recording medium are fabricated by a procedure of sequential coating or simultaneous multi-layer coating. Preferably, the two backcoating layers are formed at the same time. The mixing and dispersion of materials prior to making the magnetic recording layer and the two backcoating layers may be carried out using a roll mill, a kneader, a double planetary mixer, an agitator mill, a sand mill, a pin mill, a ball mill, a pebble mill, or their combination.

Some examples of the magnetic recording medium of the present invention will now be explained in the form of a video tape.

## Example 1

In Example 1, the magnetic powder material of the magnetic recording layer was ferromagnetic powder having a major axis length of 0.15 $\mu$m, an aspect ratio of 8, a coercive force of 800 Oe, a saturation magnetization of 72 emu/g, and a BET specific area of 48 $m^2$/g. Its composition consisted of 100 parts of magnetic powder, 8 parts of vinyl chloride resin, 8 parts of polyurethane resin, 2 parts of carbon black, 7 parts of aluminum, 1 part of myristic acid, 2 parts of butyl stearate, solvent (100 parts methylethylketone, 50 parts methylisobutylketone, 100 parts toluene, and 50 parts cyclohexanone), and 4 parts of curing agent. The magnetic powder material was kneaded and dispersed using a pressure-type kneader and then, diluted with a solvent to a coating paste of desired viscosity, and in turn sand milled for further dispersion. The dispersed coating paste was mixed with an additive of polyisosianate compound (Collonate-L, a tradename of Nippon Polyurethane) and filtered with a 1-micron filter to prepare a magnetic coating material (A) for forming the magnetic recording layer. The plate-like hexagonal ferrite magnetic powder material for forming a lower layer of the two backcoatings was 0.15 $\mu$m in the plate diameter, 10 in the aspect ratio, and 51 $m^2$/g in the BET specific area. The material having the same composition as of the magnetic recording layer material was then processed for dispersion by a similar manner to a lower coating material (B-1). A backcoating material (B-2) was prepared by mingling and dispersing with a ball mill a mixture of 100 parts carbon black which was 20 $\mu$m in average primary particle diameter, 3 parts $\alpha$-$Al_2O_3$ doped with Co, 45 parts polyurethane resin, 45 parts nitrocellulose, and 600 parts mixed organic solvent (MEK/toluene/cyclohexanone =2/2/1), adding 10 parts of polyisosianate compound (Collonate-L, by Nippon Polyurethane) to the mixture, and filtering a resultant dispersed mixture with a 2-micron filter. The magnetic recording layer coating material (A) was first applied onto a PET film of $7\mu$ thick, magnetically oriented, dried out, and mirror finished at surface with a super calender. Then, the PET film coated with a 2.5 $\mu$m thickness of the magnetic recording layer was wound to a material roll. The reverse side of the PET film where no magnetic recording layer extended was coated simultaneously with the lower coating material (B-1) and the backcoating material (B-2) by a coater equipped with two corresponding die-nozzles. Then, the lower coating was magnetically oriented by imposing a vertical magnetic field and the two coatings were dried out. After mirror finishing with a super calender and heat treating, a 12 $\mu$m thickness of magnetic tape ((A): 2.5 $\mu$m, (B-1): 2.0 $\mu$m, and (B-2): 0.5 $\mu$m) was completed. A sample video tape having a width of 1/2 inch was cut from the finished magnetic tape.

Example 2

For preparation of Example 2, the lower coating material (B-1) and the backcoating material (B-2) which were identical to those of Example 1 were applied onto one side of a 7-$\mu$m-thick PET film, magnetically oriented, and dried out. Then, the reverse side of the PET film was coated with the magnetic recording layer coating material (A) as of Example 1 which was in turn magnetic oriented and dried out. After mirror finishing with a super calender, a magnetic tape which was 12 $\mu$m in the overall thickness ((A): 2.5 $\mu$m, (B-1): 2.0 $\mu$m, and (B-2): 0.5 $\mu$m) was completed having a 2.5 $\mu$m thickness of the magnetic recording layer. Then, a sample video tape having a width of 1/2 inch was cut from the finished magnetic tape.

Example 3

For preparation of Example 3, a layer of the lower coating material (B-1) identical to that of Example 1 was provided in the same manner as of Example 1 and then, magnetically oriented by imposing a horizontal magnetic field. The overall thickness of a finished magnetic tape was 12 $\mu$m ((A): 2.5 $\mu$m, (B-1): 2.0 $\mu$m, and (B-2): 0.5 $\mu$m). Then, a sample video tape having a width of 1/2 inch was cut from the finished magnetic tape.

Example 4

For preparation of Example 4, a magnetic tape which was 12 $\mu$m in the overall thickness ((A): 2.5 $\mu$m, (B-1): 2.0 $\mu$m, and (B-2): 0.5 $\mu$m) was fabricated in the same manner as of Example 1, except that the hexagonal ferrite magnetic power material for developing a lower coating layer was barium ferrite magnetic powder having an average particle diameter of 1 $\mu$m and a plate of hexagonal shape. Then, a sample video tape having a width of 1/2 inch was cut from the magnetic tape.

Comparative Example 1

The magnetic recording layer coating material (A) was applied onto one side of a 9-$\mu$m-thick PET film, magnetically oriented, and dried out. After mirror finishing with a super calender, the PET film having a 2.5 $\mu$m thickness of the magnetic recording layer was wound to a material roll. Then, using a die-nozzle coater, the reverse side of the PET film was coated with the same backcoating material (B-2) as of the above Examples, and in turn dried out and heat treated. The thickness of a resultant magnetic tape was 12 $\mu$m ((A): 2.5 $\mu$m and (B-2): 0.5 $\mu$m). Then, a sample video tape having a width of 1/2 inch was cut from the magnetic tape. Fig.2 shows a cross sectional view of this sample video tape, which consists of a magnetic recording layer 1, a nonmagnetic substrate 2, and a backcoating layer 3.

Comparative Example 2

A sample video tape was prepared in the same manner as of Comparative Example 1, except that the PET film was replaced with a PEN film.

Comparative Example 3

A sample video tape was prepared in the same manner as of Example 1, except that the thickness of the nonmagnetic backcoating layer was decreased to 0.2 $\mu$m.

Comparative Example 4

The magnetic recording layer coating material (A) was applied onto one side of a 7-$\mu$m-thick PET film, magnetically oriented, and dried out. After mirror finishing with a super calender, the PET film having a 2.5 $\mu$m thickness of the magnetic recording layer was wound to a material roll. Then, using a die-nozzle coater, the reverse side of the PET film was coated with the same lower coating material (B-1) as of the above Examples which was in turn magnetically oriented, dried out, and heat treated. The thickness of a resultant magnetic tape was 12 $\mu$m ((A): 2.5 $\mu$m and (B-1): 2.5 $\mu$m). Then, a sample video tape having a width of 1/2 inch was cut from the magnetic tape.

Each sample video tape of the foregoing Examples and Comparative Examples was then tested for examining the following subjects.

(1) Tape rigidity (kg/mm$^2$)

Using a stretch tester made by Orientech, the rigidity of the lower backcoating layer was examined by measuring a tensile strength of the 1/2-inch wide sample video tape in both the lengthwise and widthwise directions (i.e. the moving (MD) and transverse (TD) directions).

(2) Tape stiffness (mg)

Using a stiffness tester made by Toyo Seiki, the stiffness (a buckling strength) of the sample tape was measured in the moving and transverse directions (MD and TD).

(3) RF output (dB) at 7 MHz

An RF output at 7 MHz was measured during playback of the sample tape on a commercial S-VHS video taperecorder.

(4) Operational durability and stability

The operational durability of the sample tape was examined by visually surveying the tape surface after 100-run movement on a commercial S-VHS video taperecorder. Also, the output stability was examined from a consistency (a rate of maximum/minimum) in the envelope of a playback signal during playback operation.

The measurement results for the sample tapes are listed in Table 1.

As apparent from Table 1, each sample tape of reduced thickness according to the present invention exhibits improvement in the operational durability and the output stability with its properties for electric-to-magnetic conversion remaining unchanged.

Table 1

| | Rigidity (kgf/mm²) | | Stiffness (mg) | | RF output (dB) | Running Durabil-ity | Envelope Consist-ency (%) |
|---|---|---|---|---|---|---|---|
| | MD | TD | MD | TD | | | |
| Example 1 | 1580 | 1540 | 135 | 129 | +0.5 | good | 88 |
| Example 2 | 1790 | 1720 | 136 | 130 | +0.2 | good | 84 |
| Example 3 | 1440 | 1394 | 144 | 119 | +0.2 | almost good | 83 |
| Example 4 | 1690 | 1640 | 138 | 133 | +0.3 | good | 86 |
| Com.Ex. 1 | — | — | 82 | 74 | −0.5 | Bias stretched, creased at edge | 58 |
| Com.Ex. 2 | — | — | 88 | 81 | −0.2 | creased at edge | 74 |
| Com.Ex. 3 | 1410 | 1380 | 115 | 104 | −0.6 | Bias stretched, creased at edge | 68 |
| Com.Ex. 4 | 1690 | 1610 | 120 | 110 | −0.9 | Bias stretched, creased at edge | 63 |

As apparent from Table 1, the sample video tapes according to the present invention, which are much reduced in the thickness, exhibit improvements in the operational durability and output stability without deteriorating the electric-to-magnetic conversion characteristics.

It is also appreciated that the embodiment of the present invention is intended to employ a barium ferrite magnetic powder material for illustrative purpose and not so limited.

Although the present invention has been described with respect to an S-VHS video recording tape, it can be applied with equal success to other magnetic recording media including an 8-mm video tape, an audio tape, a computer magnetic tape, and a floppy-disk recording medium.

**Claims**

1. A magnetic recording medium comprising:
   a nonmagnetic substrate;
   a magnetic recording layer arranged on one surface of the substrate; and
   a backcoating layer arranged on the other surface of the substrate,
   characterized in that said backcoating layer comprises a lower layer formed on the substrate and a nonmagnetic backcoating layer formed on said lower layer, said lower layer comprising a plate-like hexagonal ferrite magnetic powder material and said non-magnetic backcoating layer having thickness ranging from 0.3 to 1.0 μm.

2. A magnetic recording medium according to claim 1, wherein the plate-like hexagonal ferrite magnetic powder material is magnetically aligned so that its easy magnetization axis is in a widthwise direction of the magnetic recording medium.

3. A magnetic recording medium according to claim 1, wherein the plate-like hexagonal ferrite magnetic powder material is magnetically aligned so that its easy magnetization axis is in a lengthwise direction of the magnetic recording medium.

**Patentansprüche**

1. Magnetischer Aufzeichnungsträger mit:
   einem nicht-magnetischen Substrat;
   einer auf einer Oberfläche des Substrats angeordneten magnetischen Aufzeichnungsschicht; und
   einer auf der anderen Oberfläche des Substrats angeordneten Rückbeschichtungsschicht,
   dadurch gekennzeichnet, daß die Rückbeschichtungsschicht eine untere Schicht aufweist, die auf dem Substrat vorgesehen ist, und eine nicht-magnetische Rückbeschichtungsschicht, die auf der unteren Schicht vorgesehen ist, wobei die untere Schicht ein plattenartiges, hexagonales Ferrit-Magnetpulvermaterial aufweist, und die nicht-magnetische Rückbeschichtungsschicht eine Dicke im Bereich von 0,3 bis 1,0 µm aufweist.

2. Magnetischer Aufzeichnungsträger nach Anspruch 1, bei welchem das plattenartige, hexagonale Ferrit-Magnetpulvermaterial magnetisch ausgerichtet ist, so daß seine leichte Magnetisierungsachse in der Breitenrichtung des magnetischen Aufzeichnungsträgers verläuft.

3. Magnetischer Aufzeichnungsträger nach Anspruch 1, bei welchem das plattenartige, hexagonale Ferrit-Magnetpulvermaterial magnetisch ausgerichtet ist, so daß seine leichte Magnetisierungsachse in der Längenrichtung des magnetischen Aufzeichnungsträgers verläuft.

**Revendications**

1. Support d'enregistrement magnétique comprenant :
   un substrat non magnétique ;
   une couche d'enregistrement magnétique disposée sur une surface du substrat ; et
   une couche d'enduction envers disposée sur l'autre surface du substrat,
   caractérisé en ce que ladite couche d'enduction envers comprend une couche inférieure formée sur le substrat et une couche d'enduction envers non magnétique formée sur ladite couche inférieure, et ladite couche inférieure comprenant un matériau magnétique de ferrite hexagonale en poudre sous forme de paillettes et ladite couche d'enduction envers non magnétique ayant une épaisseur comprise dans l'intervalle de 0,3 à 1,0 µm.

2. Support d'enregistrement magnétique selon la revendication 1, dans lequel le matériau magnétique de ferrite hexagonale en poudre sous forme de paillettes est magnétiquement aligné de sorte que son axe de magnétisation libre est dans une direction dans le sens de la largeur du support d'enregistrement magnétique.

3. Support d'enregistrement magnétique selon la revendication 1, dans lequel le matériau magnétique de ferrite hexagonale en poudre sous forme de paillettes est magnétiquement aligné de sorte que son axe de magnétisation libre est dans une direction dans le sens de la longueur du support d'enregistrement magnétique.

FIG.1

PRIOR ART

FIG.2